# EUROPEAN PATENT APPLICATION

(11) **EP 4 538 015 A1**
(43) Date of publication of application: **16.04.2025**
(21) Application number: 24205203.3
(22) Date of filing: 08.10.2024
(51) Int. Cl.: B29C 45/17, B29C 45/76

(54) **INJECTION MOLDING MACHINE AND METHOD OF DETECTING ABNORMALITY OF INJECTION MOLDING MACHINE**

(30) Priority: 10.10.2023 JP 2023175184
(71) Applicant: The Japan Steel Works, Ltd., Tokyo 141-0032 (JP)
(72) Inventor: KOSUE, Shogo, Tokyo 141-0032 (JP)
(74) Representative: Simmons & Simmons LLP (Munich)

(57) **Abstract**

An injection molding machine (100) performs, during a period of a flushing process, a first acquisition process for acquiring a physical quantity for detecting an abnormality of a first drive apparatus.

## Description

### CROSS REFERENCE TO RELATED APPLICATIONS

This nonprovisional application is based on Japanese Patent Application No. 2023-175184 filed on October 10, 2023 with the Japan Patent Office, the entire contents of which are hereby incorporated by reference.

### BACKGROUND OF THE INVENTION

### Field of the Invention

The present disclosure relates to an injection molding machine and a method of detecting an abnormality of an injection molding machine.

### Description of the Background Art

For example, Japanese Patent Laying-Open No. 2021-74917 discloses an injection molding machine including a ball screw. This injection molding machine detects an abnormality of the ball screw by frequency analysis of vibration strength of the ball screw.

### SUMMARY OF THE INVENTION

In the injection molding machine described above, a drive apparatus (for example, the ball screw described above) is controlled to acquire a physical quantity (for example, the vibration strength described above) of the drive apparatus. In the injection molding machine described above, however, timing of control of the drive apparatus is not considered. In the injection molding machine described above, therefore, production of molded articles is temporarily suspended to control the drive apparatus, which may reduce productivity of the molded articles. The injection molding machine may also omit to perform the process itself of detecting an abnormality of the drive apparatus.

The present invention has been made to solve such a problem, and an object of the present invention is to avoid omitting to perform a process of detecting an abnormality of a drive apparatus, while suppressing reduction in productivity of molded articles.

An injection molding machine and a method of detecting an abnormality of an injection molding machine according to the present disclosure perform, during a flushing process, a first acquisition process of acquiring a first physical quantity detected by a first sensor during a period in which a first drive apparatus is controlled to drive a screw. The injection molding machine and the method of detecting an abnormality of an injection molding machine according to the present disclosure detect an abnormality of the first drive apparatus based on the first physical quantity acquired in the first acquisition process.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram for illustrating a construction of an injection molding machine.
Fig. 2 is a diagram showing a detailed construction of an actuation apparatus.
Fig. 3 is a functional block diagram of a controller.
Fig. 4 is a flowchart showing a flow of control by the controller.
Fig. 5 is a flowchart showing a flow of a first flushing process.
Fig. 6 is a flowchart showing a flow of an acquisition process.
Fig. 7 is a flowchart showing a flow of a second flushing process.
Fig. 8 is a flowchart showing a flow of an acquisition process in another embodiment.
Fig. 9 is a flowchart showing a flow of an acquisition process in another embodiment.
Fig. 10 is a diagram showing an exemplary presentation on a display 132.
Fig. 11 is a diagram showing an exemplary time series of a process in an injection molding machine 100 in another embodiment.
Fig. 12 is a diagram showing an exemplary time series of a process in injection molding machine 100 in another embodiment.

### DESCRIPTION OF THE PREFERRED EMBODIMENTS

Embodiments of the present invention will be hereinafter described in detail with reference to the drawings, in which the same or corresponding portions are denoted by the same reference characters and description thereof will not be repeated.

### <First Embodiment>

### [Construction of Injection Molding Machine]

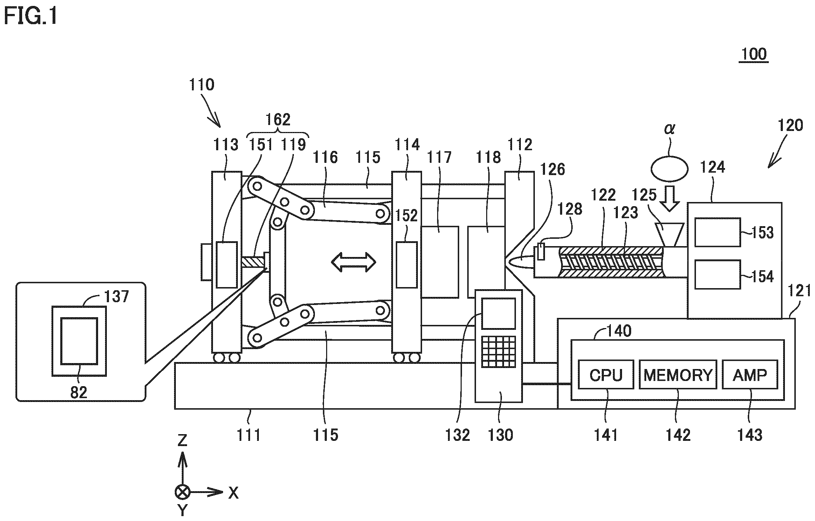

Fig. 1 is a diagram for illustrating a construction of an injection molding machine 100. For the sake of convenience of description, a floor surface where injection molding machine 100 is arranged in Fig. 1 is defined as an XY plane and a direction perpendicular to the floor surface is defined as a Z-axis direction. A positive direction along a Z axis may be referred to as an upper surface side or above and a negative direction thereof may be referred to as a lower surface side or below. Though injection molding machine 100 is shown as a lateral injection molding machine, it is not limited to the lateral type but may be a vertical injection molding machine. An X-axis direction is defined as a direction of extension of a cylinder 122 which will be described later.

Injection molding machine 100 includes a mold clamping apparatus 110 that clamps a mold, an injection apparatus 120 that melts and injects an injection material, a control panel 130, and a controller 140. In Fig. 1, mold clamping apparatus 110 is arranged on a side of the negative direction along an X axis with respect to injection apparatus 120.

Mold clamping apparatus 110 includes a bed 111, a fixed plate 112, a mold clamping housing 113, a moving plate 114, a tie bar 115, a mold clamping mechanism 116, molds 117 and 118, a ball screw 119, a ball screw nut 137, and a second vibration sensor 82. Bed 111 is arranged on the floor surface, and such apparatuses as fixed plate 112, mold clamping housing 113, and moving plate 114 are mounted on an upper surface thereof.

Fixed plate 112 is fixed on bed 111 at an end on a side closer to injection apparatus 120 (that is, the positive direction along the X axis). Mold clamping housing 113 is arranged on bed 111 at an end in the negative direction along the X axis. Fixed plate 112 and mold clamping housing 113 are coupled to each other by tie bar 115 including a plurality of bars. Mold clamping housing 113 is movable over bed 111 in the X-axis direction.

Moving plate 114 is arranged on bed 111 between fixed plate 112 and mold clamping housing 113. Moving plate 114 is constructed as being movable in the X-axis direction. Mold clamping housing 113 and moving plate 114 are coupled to each other by mold clamping mechanism 116. Mold clamping mechanism 116 includes a toggle mechanism. Ball screw 119 is coupled to the toggle mechanism via ball screw nut 137. A servo motor 151 arranged in mold clamping housing 113 is driven to rotate ball screw 119, so that moving plate 114 can be moved relatively to mold clamping housing 113 in the X-axis direction. A direct acting type cylinder which is driven by a hydraulic pressure may be employed for mold clamping mechanism 116.

Controller 140 thus controls moving plate 114 by driving servo motor 151 to rotate ball screw 119. Servo motor 151 and ball screw 119 correspond to a "second drive apparatus 162" in the present disclosure. Moving plate 114 corresponds to a "prescribed member" in the present disclosure.

Second vibration sensor 82 is provided in ball screw nut 137. For example, an acceleration sensor is employed as second vibration sensor 82. Second vibration sensor 82 detects a vibration value of ball screw 119 (second drive apparatus 162) while ball screw 119 is being driven. The vibration value is used in a process of detecting an abnormality of ball screw 119 (second drive apparatus 162). Second vibration sensor 82 corresponds to a "second sensor" in the present disclosure. The vibration value of ball screw 119 while it is being driven corresponds to a "second physical quantity" in the present disclosure.

Molds 117 and 118 are arranged in moving plate 114 and fixed plate 112, respectively. Mold 117 and mold 118 are arranged as being opposed to each other between moving plate 114 and fixed plate 112. By moving mold 117 in the X-axis direction with the use of mold clamping mechanism 116, mold 117 and mold 118 can be brought in intimate contact with each other or moved away from each other. In the description below, a step of transition from a state in which molds 117 and 118 are distant from each other to a state in which the molds are in intimate contact with each other is referred to as "mold clamping." A step of transition from the state in which molds 117 and 118 are in intimate contact with each other to the state in which the molds are distant from each other is referred to as "mold opening."

While mold 117 and mold 118 are in intimate contact with each other in the mold clamping step, the molds are filled with a molten material (resin), and the molds are cooled to solidify the material. Then, a product (molded article) in a desired shape can be molded. After the product is molded, with mold 117 being distant from mold 118 in the mold opening step, an ejection mechanism (not shown) arranged in moving plate 114 can be activated to take the molded article out of mold 117. The ejection mechanism is driven by a servo motor 152 arranged in moving plate 114. A step of taking out a product with the use of the ejection mechanism is referred to as an "ejection" step.

Injection apparatus 120 includes a base 121, cylinder 122, an actuation apparatus 124, a hopper 125, and a temperature sensor 128. Base 121 is arranged on the floor surface of bed 111 on the side of the positive direction along the X axis, and actuation apparatus 124 is mounted on an upper surface thereof. A servo motor 153 for injection, a servo motor 154 for plasticization, and the like are arranged in actuation apparatus 124.

Cylinder 122 that extends in the X-axis direction is arranged in actuation apparatus 124. Cylinder 122 includes a heater (not shown) that heats the inside, a screw 123, and an injection nozzle 126. Screw 123 is arranged in cylinder 122. Screw 123 is driven by servo motor 154 in actuation apparatus 124 and it is constructed as being rotatable around the X-axis direction as a rotation axis. Screw 123 is driven by servo motor 153 and it is constructed to be movable in the X-axis direction. Injection nozzle 126 is arranged at an end of cylinder 122 on a side of mold clamping apparatus 110 (that is, the end in the negative direction along the X axis). A resin material α like beads is injected into hopper 125. Cylinder 122 heats and melts resin material α, which is kneaded by screw 123 to produce a molten material. A step of melting the resin material as such is referred to as a "plasticization" step.

As will be described later, actuation apparatus 124 moves screw 123 in the X-axis direction, so that injection molding machine 100 brings injection nozzle 126 in contact with a sprue bush of mold 118 in mold clamping apparatus 110. Injection molding machine 100 then injects the molten material from injection nozzle 126 to fill a cavity in molds 117 and 118 with the molten material. A construction of a nozzle touch mechanism is implemented as set forth above. Servo motor 153 applies a pressure to the molten material by moving screw 123 in cylinder 122 in the negative direction along the X axis to inject the molten material into molds 117 and 118 and to hold a constant pressure of the injected molten material.

The step of injecting the molten material into molds 117 and 118 is referred to as an "injection" step. A step of holding the molten material filled in molds 117 and 118 at a constant pressure and cooling the molten material after the injection step is referred to as a "pressure holding" step.

Temperature sensor 128 is arranged in the vicinity of injection nozzle 126 in cylinder 122. Temperature sensor 128 detects a temperature of the molten material in cylinder 122 and outputs the temperature to controller 140. Controller 140 controls the heater based on a detection value from temperature sensor 128 and adjusts the temperature of the molten material to a desired temperature.

After the pressure holding step is completed, the mold opening step and the ejection step are performed to take out the molded product.

Injection molding machine 100 can successively form products by cyclically and repeatedly performing the mold clamping step, the injection step, the pressure holding step, the plasticization step, the mold opening step, and the ejection step. In the present embodiment, the mold clamping step, the injection step, the pressure holding step, the plasticization step, the mold opening step, and the ejection step are also collectively referred to as a "molding cycle."

Controller 140 is contained in base 121. Controller 140 includes a CPU 141, a memory 142, and a servo amplifier 143 for driving each motor. Controller 140 obtains detection values from various sensors arranged in injection molding machine 100 and controls injection molding machine 100 in an integrated manner.

Control panel 130 is an apparatus that allows an operator to operate injection molding machine 100 and includes a display 132 that shows various images and an input apparatus such as a keyboard. Control panel 130 is connected to controller 140, and can obtain a state of injection molding machine 100 and have the state shown or can output an operation signal inputted by a user from the input apparatus to controller 140. Control panel 130 may be implemented by a touch panel including display 132 and the input apparatus as being integrated. Control panel 130 may be attached to bed 111 or base 121 of injection molding machine 100 or arranged at a position independent of injection molding machine 100.

### [Construction of Actuation Apparatus]

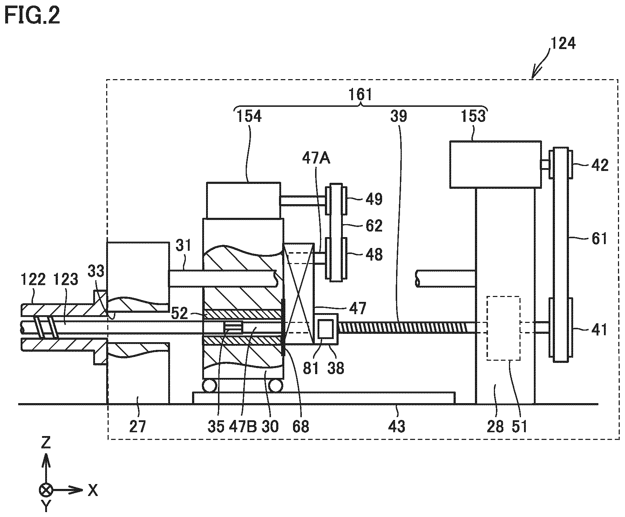

Fig. 2 is a diagram showing a detailed construction of actuation apparatus 124 in Fig. 1. Though Fig. 2 is mainly referred to in the description of actuation apparatus 124 below, Fig. 1 is also referred to as appropriate. Fig. 2 shows a part of cylinder 122 and a part of screw 123. As described with reference to Fig. 1, actuation apparatus 124 includes servo motor 153 and servo motor 154.

Actuation apparatus 124 further includes a fixed plate 27, an end plate 28, a linear guide 43, and a movable plate 30. Servo motor 154 is arranged in movable plate 30. Servo motor 153 is arranged in end plate 28. Fixed plate 27 and end plate 28 are coupled to each other by a guide bar 31. Movable plate 30 is arranged on linear guide 43. Linear guide 43 guides movable plate 30 in the X-axis direction. Movable plate 30 moves in the X-axis direction as being guided by guide bar 31.

Fixed plate 27 is provided with a hole 33, and a rear end of cylinder 122 is fixed such that this hole 33 coincides with a hole in cylinder 122. A rear end of screw 123 passes through hole 33 and is fixed to a rotational drive shaft 35. Rotational drive shaft 35 is coupled to an output shaft 47B of a reduction gear 47 which will be described later.

Actuation apparatus 124 further includes a ball screw 39, a ball screw nut 38, a bearing 51, a first timing belt 61, linear guide 43, and a first vibration sensor 81. First vibration sensor 81 corresponds to a "first sensor" in the present disclosure. Bearing 51 is accommodated in end plate 28. Bearing 51 rotatably supports a part of ball screw 39.

Ball screw nut 38 is fixed to movable plate 30 with later-described reduction gear 47 being interposed. Ball screw nut 38 is attached to ball screw 39. Ball screw 39 of ball screw nut 38 passes through end plate 28 and has a tip end protruding from end plate 28. A first pulley 41 is provided at this portion of protrusion. A second pulley 42 is provided on a rotation shaft of servo motor 153, and first timing belt 61 is wound around first pulley 41 and second pulley 42. First timing belt 61 transmits motive power from servo motor 153 to ball screw 39.

Therefore, when servo motor 153 is driven under the control by controller 140, motive power from servo motor 153 is transmitted to ball screw 39 by first timing belt 61. As ball screw 39 is rotated by the motive power, ball screw nut 38 moves in the X-axis direction and movable plate 30 also moves in the X-axis direction. As movable plate 30 moves in the X-axis direction, screw 123 moves in the X-axis direction. As set forth above, when servo motor 153 is driven under the control by controller 140, screw 123 moves in the X-axis direction.

Actuation apparatus 124 further includes reduction gear 47, a second timing belt 62, a second bearing 52, and a load cell 68. Second bearing 52 rotatably supports screw 123. Reduction gear 47 decelerates rotation of a rotation shaft of servo motor 154. A third pulley 48 is provided on an input shaft 47A of reduction gear 47. A fourth pulley 49 is provided on the rotation shaft of servo motor 154. Second timing belt 62 is wound around third pulley 48 and fourth pulley 49. Second timing belt 62 transmits the motive power from servo motor 154 to screw 123 through rotational drive shaft 35. Therefore, when servo motor 154 is driven under the control by controller 140, screw 123 rotates.

Load cell 68 is arranged in movable plate 30. Load cell 68 detects rotational torque of output shaft 47B.

Controller 140 thus controls screw 123 by driving servo motor 153 and servo motor 154 to rotate ball screw 39. Servo motor 153, servo motor 154, and ball screw 39 correspond to a "first drive apparatus 161" in the present disclosure.

First vibration sensor 81 is provided in ball screw nut 38. For example, an acceleration sensor is employed as first vibration sensor 81. First vibration sensor 81 detects a vibration value of ball screw 39 (first drive apparatus 161) while ball screw 39 is being driven. The vibration value is used in a process of detecting an abnormality of ball screw 39 (first drive apparatus 161). First vibration sensor 81 corresponds to a "first sensor" in the present disclosure. The vibration value of ball screw 39 being driven corresponds to a "first physical quantity" in the present disclosure.

### [Functional Block Diagram of Controller]

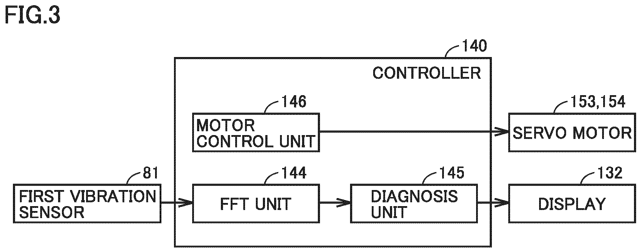

Fig. 3 is a functional block diagram of controller 140. Though Fig. 3 is mainly referred to in the description of controller 140 below, Figs. 1 and 2 are also referred to as appropriate. Controller 140 includes a motor control unit 146, a fast Fourier transform (FFT) unit 144, and a diagnosis unit 145.

Motor control unit 146 controls the motors (such as servo motor 153 and servo motor 154) of injection molding machine 100. Motor control unit 146 controls servo motor 153 and servo motor 154 to drive screw 123 (see the description of Fig. 2).

In the present embodiment, motor control unit 146 drives screw 123 not only to produce a molded article, but also for an abnormality detection process and a flushing process. The abnormality detection process is a diagnosis process for detecting abnormalities of first drive apparatus 161 and second drive apparatus 162, as described above. In the present embodiment, a process of detecting an abnormality of first drive apparatus 161 is described as the abnormality detection process, and a process of detecting an abnormality of second drive apparatus 162 will be described later in another embodiment.

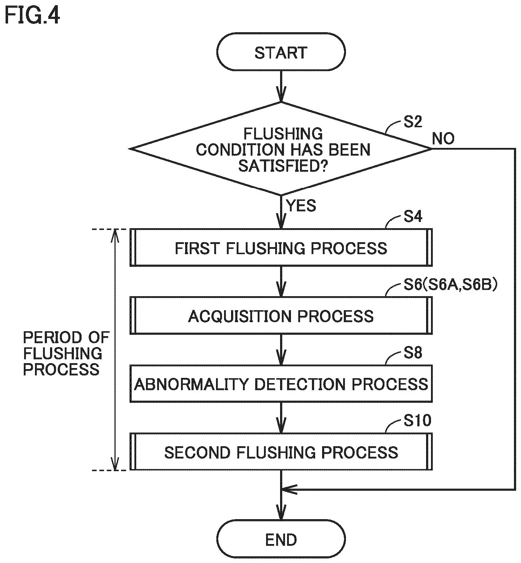

The flushing process is a process for removing the resin remaining in cylinder 122 (which is also referred to as "residual resin" below). Controller 140 performs the flushing process by performing at least one of the movement of screw 123 and the rotation of screw 123. Controller 140 performs the flushing process when a prescribed flushing condition is satisfied, or manually by the user. The flushing condition includes, for example, a condition that injection molding machine 100 is started, a condition that the machine is stopped for a short period of time (so-called momentary stoppage), and a condition that resin replacement is performed. The flushing process in the present embodiment includes a first flushing process and a second flushing process. The flushing process will be described in detail with reference to Fig. 4 and the like. The flushing condition corresponds to a "prescribed condition" in the present disclosure.

First vibration sensor 81 outputs vibration data showing a time series of the vibration value to controller 140. FFT unit 144 performs Fourier transform on the vibration data to convert the vibration data into data in a frequency domain (which is also referred to as "frequency data" or "frequency spectrum" below).

The resultant frequency data is outputted to diagnosis unit 145. Diagnosis unit 145 performs a process of detecting an abnormality of ball screw 39 (first drive apparatus 161) based on the frequency data from FFT unit 144. Then, a result of the abnormality detection process (whether or not first drive apparatus 161 is abnormal) is presented on display 132.

### [Flow of Main Control by Controller 140]

A flow of main control by controller 140 will now be described. Fig. 4 is a flowchart showing a flow of control by controller 140. Though Fig. 4 is mainly referred to in the description of control by controller 140 below, Figs. 1 to 3 are also referred to as appropriate. A process of the flowchart in Fig. 4 is performed, for example, every prescribed period (for example, one second).

First, in step S2, controller 140 determines whether or not the flushing condition has been satisfied. When the flushing condition has been satisfied (YES in step S2), the process proceeds to step S4. When the flushing condition has not been satisfied (NO in step S2), on the other hand, the process of Fig. 4 ends.

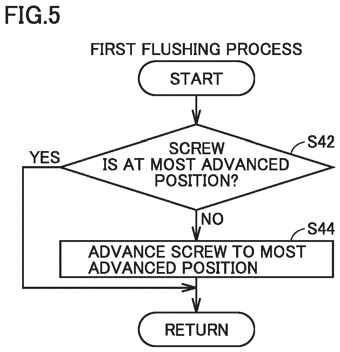

In step S4, controller 140 performs a first flushing process. The first flushing process will be described later with reference to Fig. 5.

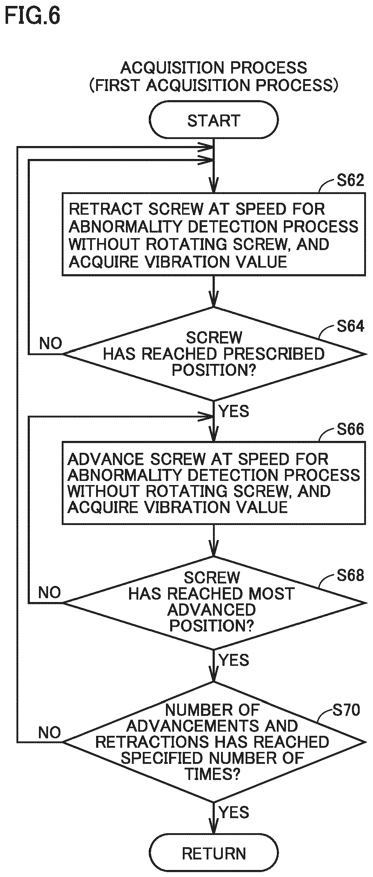

After performing the process of step S4, in step S6, controller 140 performs an acquisition process. The acquisition process is a process of acquiring a vibration value (first physical quantity) detected by first vibration sensor 81 during a period in which controller 140 controls first drive apparatus 161 to drive screw 123. The acquisition process will be described later in detail with reference to Fig. 6. The acquisition process for acquiring the first physical quantity is also referred to as a "first acquisition process."

After performing the process of step S6, in step S8, controller 140 performs an abnormality detection process. As described above, the abnormality detection process is a process of detecting an abnormality of first drive apparatus 161 based on the frequency data of the vibration value of ball screw 39.

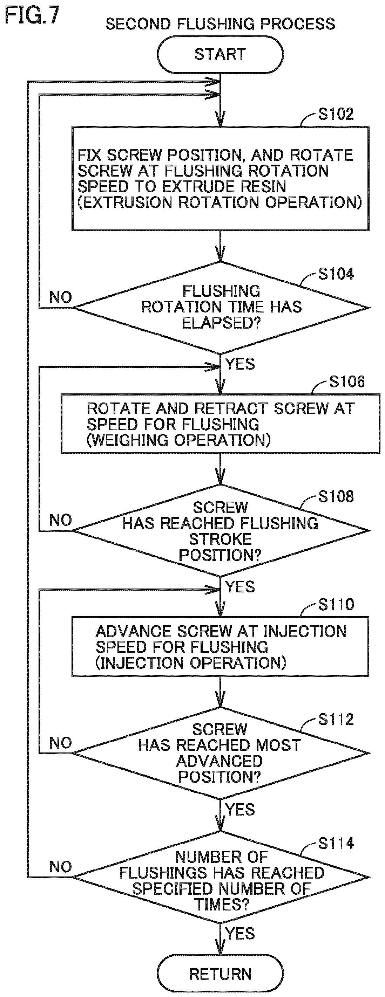

After performing the process of step S8, in step S10, controller 140 performs a second flushing process. The second flushing process will be described later with reference to Fig. 7.

After performing the process of step S10, controller 140 performs a molding process (a process of producing a molded article) by a manual operation of the user, for example.

As shown in Fig. 4 as well, a period from the start of the first flushing process of step S4 to the end of the second flushing process corresponds to a "period of the flushing process" in the present disclosure.

### [First Flushing Process]

Fig. 5 is a flowchart showing a flow of the first flushing process of step S4 in Fig. 4. Though Fig. 5 is mainly referred to in the description of the first flushing process below, Fig. 1 is also referred to as appropriate.

In step S42, controller 140 determines whether or not screw 123 is at its most advanced position. The most advanced position is a position of screw 123 that has been moved by the maximum amount in the direction of advancement of screw 123 (the negative direction along the X axis in Fig. 1).

When screw 123 is at the most advanced position in step S42 (YES in step S42), the process of Fig. 5 ends. When screw 123 is not at the most advanced position in step S42 (NO in step S42), on the other hand, the process proceeds to step S44.

In step S44, controller 140 advances screw 123 to the most advanced position. Through the process of step S44, controller 140 can discharge the residual resin present in the direction of advancement of screw 123 in cylinder 122.

As described with reference to Fig. 5, the first flushing process is a flushing process for removing the residual resin without introducing new resin into cylinder 122.

### [Acquisition Process]

Fig. 6 is a flowchart showing a flow of the acquisition process of step S6 in Fig. 4. Though Fig. 6 is mainly referred to in the description of control by controller 140 below, Figs. 1, 2 and 4 are also referred to as appropriate.

In step S62, controller 140 retracts screw 123 at a speed for the abnormality detection process (step S8 in Fig. 4) without rotating screw 123. This speed is a predetermined speed. Controller 140 then acquires a vibration value detected by first vibration sensor 81 (see Fig. 2) during the retraction.

In step S64, controller 140 determines whether or not screw 123 has reached a prescribed position. The prescribed position is a predetermined position for the abnormality detection process (step S8 in Fig. 4). When screw 123 has not reached the prescribed position in step S64 (NO in step S64), controller 140 repeats the process of step S62 until screw 123 reaches the prescribed position. When screw 123 has reached the prescribed position in step S64 (YES in step S64), the process proceeds to step S66.

In step S66, controller 140 advances screw 123 at a speed for the abnormality detection process (step S8 in Fig. 4) without rotating screw 123. This speed is a predetermined speed. Controller 140 then acquires a vibration value detected by first vibration sensor 81 (see Fig. 2) during the advancement.

In step S68, controller 140 determines whether or not screw 123 has reached the most advanced position (see step S42 in Fig. 5). When screw 123 has not reached the most advanced position in step S68 (NO in step S68), controller 140 repeats the process of step S66 until screw 123 reaches the most advanced position. When screw 123 has reached the most advanced position in step S68 (YES in step S68), the process proceeds to step S70.

In step S70, controller 140 determines whether or not the number of advancements and retractions has reached a specified number of times. The number of advancements and retractions is the number of times that a process of advancing and retracting screw 123 has been performed. The process of advancing and retracting screw 123 refers to a reciprocation between the prescribed position in step S64 and the most advanced position in step S68. In other words, the number of advancements and retractions is the number of reciprocations of screw 123. The specified number of times is a predetermined number of times, for example, a value greater than or equal to one.

When the number of advancements and retractions has not reached the specified number of times in step S70 (NO in step S70), the process returns to step S62. When the number of advancements and retractions has reached the specified number of times (YES in step S70), the acquisition process ends.

### [Second Flushing Process]

Fig. 7 is a flowchart showing a flow of the second flushing process of step S10 in Fig. 4. Though Fig. 7 is mainly referred to in the description of control by controller 140 below, Figs. 1, 2 and 4 are also referred to as appropriate.

In step S102, controller 140 fixes the position of screw 123, and rotates screw 123 at a prescribed flushing rotation speed.

Then, in step S104, controller 140 determines whether or not a prescribed time period has elapsed since it started the process of step S102. The prescribed time period is also referred to as a flushing rotation time. When the flushing rotation time has not elapsed (NO in step S104), controller 140 repeats the process of step S102 until the flushing rotation time elapses. Controller 140 repeats the process of step S102 to extrude the residual resin attached to screw 123. This extrusion process is also referred to as an extrusion rotation operation. When the flushing rotation time has elapsed in step S104 (YES in step S104), the process proceeds to step S106.

In step S106, controller 140 performs the rotation and retraction of screw 123 at a speed for the flushing process.

Then, in step S108, controller 140 determines whether or not screw 123 has reached a flushing stroke position. The flushing stroke position is a predetermined position. When screw 123 has not reached the flushing stroke position (NO in step S108), controller 140 repeats the process of step S106 until screw 123 reaches the flushing stroke position. Controller 140 repeats the process of step S106 to perform an operation of weighing new resin. The new resin is introduced into injection molding machine 100 by the user before the process of step S106. When screw 123 has reached the flushing stroke position (YES in step S108), the process proceeds to step 5110.

In step S110, controller 140 advances screw 123 at an injection speed for the flushing process. As screw 123 is advanced, the resin weighed in step S106 is injected. In other words, the process of step S110 is an injection operation.

Then, in step S112, controller 140 determines whether or not screw 123 has reached the most advanced position (see also step S44 in Fig. 5). When screw 123 has not reached the most advanced position (NO in step S112), controller 140 repeats the process of step S110 until screw 123 reaches the most advanced position. When screw 123 has reached the most advanced position (YES in step S112), the process proceeds to step S114.

In step S114, controller 140 determines whether or not the number of flushings has reached a specified number of times. The number of flushings is the number of times that the flushing process, which is a series of processes from the process of step S102 to the "YES" determination in step S 112, has been performed. The specified number of times is a predetermined number of times, for example, a value greater than or equal to one.

When the number of flushings has not reached the specified number of times in step S 114 (NO in step S 114), the process returns to step S102. When the number of flushings has reached the specified number of times (YES in step S 114), the second flushing process ends.

By performing the second flushing process using the new resin, injection molding machine 100 in the present embodiment can inject (discharge) the residual resin attached to an inner wall of cylinder 122 (the residual resin that could not be removed in the first flushing process) together with the new resin (see step S 110). Though the new resin remains after the second flushing process ends, injection molding machine 100 performs the molding process using the remaining new resin. Therefore, injection molding machine 100 can avoid wasting the new resin.

### [Summary]

(1) Injection molding machine 100 in the present embodiment performs the flushing process when the flushing condition is satisfied and the molding process is stopped, or manually by the user. The flushing process is a process for removing the residual resin remaining in cylinder 122 by driving the screw. Injection molding machine 100 in the present embodiment thus performs the process of acquiring the first physical quantity (first acquisition process) during the period of the flushing process (see Fig. 4). Injection molding machine 100 then detects an abnormality of first drive apparatus 161 based on the first physical quantity. Therefore, injection molding machine 100 does not need to stop the molding process only for the process of acquiring the first physical quantity, and can therefore suppress reduction in productivity of molded articles. In addition, injection molding machine 100 performs the first acquisition process during the period of the flushing process (see Fig. 4), and can therefore avoid omitting to perform the abnormality detection process.
   As described with reference to Figs. 5 to 7 and the like, the flushing process (the first flushing process and the second flushing process) in the present embodiment is a process of driving screw 123, and the process of acquiring the first physical quantity is also a process of driving screw 123. Therefore, the process of driving screw 123 can be shared between the flushing process and the process of acquiring the first physical quantity, so that the process of acquiring the first physical quantity during the period of the flushing process can be simplified.
(2) Injection molding machine 100 performs the first flushing process (step S4 in Fig. 4) and the second flushing process (step S10 in Fig. 4) as the flushing process. The first flushing process is a process for removing the residual resin without introducing new resin into cylinder 122. The second flushing process is a process for removing the residual resin by introducing new resin into cylinder 122. As shown in Fig. 4, injection molding machine 100 performs the first acquisition process and the second flushing process after performing the first flushing process. Therefore, injection molding machine 100 performs the first acquisition process after removing the residual resin in the first flushing process, and can therefore acquire the first physical quantity of high accuracy.
(3) For example, a configuration may be implemented in which the acquisition process of step S6 is performed after the second flushing process of step S10. In such a configuration, however, the new resin weighed in the second flushing process may be damaged in the acquisition process (the process of driving screw 123). In this case, a molded article produced in the molding process after the acquisition process may be reduced in quality. Injection molding machine 100 in the present embodiment thus performs the first acquisition process after performing the first flushing process and before performing the second flushing process, as described with reference to Fig. 4. Therefore, the reduction in quality of a molded article produced in the molding process can be suppressed.
(4) As shown in Fig. 5, in the first flushing process, when the amount of movement of screw 123 in the direction of advancement is not the maximum amount (NO in step S42), controller 140 drives screw 123 such that the amount of movement of screw 123 reaches the maximum amount (positions screw 123 at the most advanced position). Therefore, controller 140 can remove the residual resin. Generally, when screw 123 is at the most advanced position (the amount of movement of screw 123 is the maximum amount), little resin remains in cylinder 122 (the amount of the residual resin is very small). When the amount of movement of screw 123 is the maximum amount (YES in step S42), therefore, no processing is performed. Therefore, injection molding machine 100 can reduce a cost of driving screw 123.

### <Second Embodiment>

The configuration in which the device for which an abnormality is detected by injection molding machine 100 in the first embodiment is first drive apparatus 161 has been described. Devices for which an abnormality is detected by injection molding machine 100 in a second embodiment are first drive apparatus 161 and second drive apparatus 162.

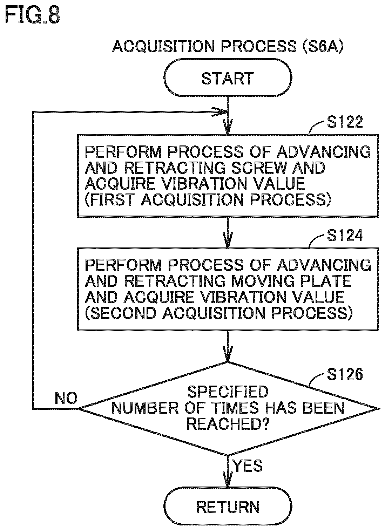

The main process by injection molding machine 100 in the second embodiment is a process in which the acquisition process of step S6 in Fig. 4 is replaced by an acquisition process of step S6A. Fig. 8 is a flowchart showing a flow of the acquisition process of step S6A. Though Fig. 8 is mainly referred to in the description of the acquisition process below, Figs. 1 and 4 are also referred to as appropriate.

In step S122, controller 140 performs the process of advancing and retracting screw 123 described above, and acquires a vibration value detected by first vibration sensor 81 while the process of advancing and retracting screw 123 is being performed (while screw 123 is being driven). In other words, in step S122, controller 140 acquires a vibration value detected by first vibration sensor 81 during a single reciprocation of screw 123. A process of acquiring the vibration value corresponds to a "first acquisition process" in the present disclosure.

The process of step S122 ends when the driving (movement) of screw 123 is stopped. When the process of step S122 ends, the process proceeds to step S124.

In step S124, controller 140 controls second drive apparatus 162 (see Fig. 1) to perform a process of advancing and retracting moving plate 114. The process of advancing and retracting moving plate 114 is a process in which moving plate 114 reciprocates between its most advanced position and most retracted position in the direction of movement of moving plate 114 (X-axis direction). In step S124, controller 140 acquires a vibration value detected by second vibration sensor 82 while the process of advancing and retracting moving plate 114 is being performed (while moving plate 114 is being driven). In other words, in step S124, controller 140 acquires a vibration value detected by second vibration sensor 82 during a single reciprocation of moving plate 114. A process of acquiring the vibration value in step S124 corresponds to a "second acquisition process" in the present disclosure.

The process of step S124 ends when the driving (movement) of moving plate 114 is stopped. When the process of step S124 ends, the process proceeds to step S126.

In step S126, controller 140 determines whether or not the number of performances of the acquisition process of the first acquisition process of step S122 and the second acquisition process of step S124 has reached a specified number of times. In the present embodiment, controller 140 counts the number of performances of the acquisition process as one when one first acquisition process and one second acquisition process are performed.

When the number of performances of the acquisition process has not reached the specified number of times in step S126 (NO in step S126), controller 140 repeats the processes of step S122 and step S124 until the number of performances of the acquisition process reaches the specified number of times.

When the number of performances of the acquisition process has reached the specified number of times in step S126 (YES in step S126), the acquisition process of Fig. 8 ends, and the process proceeds to step S8 (see Fig. 4). In this step S8, controller 140 detects an abnormality of first drive apparatus 161 based on a vibration value from first vibration sensor 81 acquired in the first acquisition process (step S122) that was performed the specified number of times. In addition, in this step S8, controller 140 detects an abnormality of second drive apparatus 162 based on a vibration value from second vibration sensor 82 acquired in the second acquisition process that was performed the specified number of times.

According to such a configuration, controller 140 performs the second acquisition process (step S124 in Fig. 8). Controller 140 then detects an abnormality of second drive apparatus 162 based on the vibration value acquired in the second acquisition process (step S8 in Fig. 4). Therefore, injection molding machine 100 can detect not only an abnormality of first drive apparatus 161 but also an abnormality of second drive apparatus 162.

Controller 140 individually performs one first acquisition process and one second acquisition process the specified number of times. Stated another way, controller 140 alternately performs the first acquisition process and the second acquisition process the specified number of times. Therefore, controller 140 can perform the second acquisition process with suppressed influence of a change in a parameter of first drive apparatus 161 due to the first acquisition process. Controller 140 can also perform the first acquisition process with suppressed influence of a change in a parameter of second drive apparatus 162 due to the second acquisition process.

The parameter of first drive apparatus 161 and the parameter of second drive apparatus 162 are a temperature of first drive apparatus 161 and a temperature of second drive apparatus 162, respectively. In this case, when controller 140 performs the first acquisition process, the temperature of first drive apparatus 161 (for example, ball screw 39) increases because screw 123 is driven. However, when controller 140 performs the second acquisition process after the first acquisition process, the temperature of first drive apparatus 161 decreases during the second acquisition process because the first acquisition process has ended. Therefore, controller 140 can perform again the first acquisition process with the decreased temperature of first drive apparatus 161 (in other words, with suppressed influence of a change in the parameter of first drive apparatus 161). Therefore, controller 140 can acquire a vibration value of high accuracy in this first acquisition process.

Similarly, when controller 140 performs the second acquisition process, the temperature of second drive apparatus 162 (for example, ball screw 119) increases because moving plate 114 (see Fig. 1) is driven. However, when controller 140 performs the first acquisition process after the second acquisition process, the temperature of second drive apparatus 162 decreases during the first acquisition process because the second acquisition process has ended. Therefore, controller 140 can perform again the second acquisition process with the decreased temperature of second drive apparatus 162 (in other words, with suppressed influence of a change in the parameter of second drive apparatus 162). Therefore, controller 140 can acquire a vibration value of high accuracy in this second acquisition process.

A configuration is adopted that includes a supply apparatus (not shown) for supplying lubricant to bearing 51 (see Fig. 2) of ball screw 39 of first drive apparatus 161 and a bearing (not shown) of ball screw 119 of second drive apparatus 162 every prescribed period. When such a configuration is adopted, the parameter of first drive apparatus 161 and the parameter of second drive apparatus 162 are a lubricant film thickness of bearing 51 of first drive apparatus 161 and a lubricant film thickness of the bearing of second drive apparatus 162, respectively.

In this case, when controller 140 performs the first acquisition process, the lubricant film thickness in first drive apparatus 161 decreases because screw 123 is driven. However, when controller 140 performs the second acquisition process after the first acquisition process, the lubricant film thickness in first drive apparatus 161 increases during the second acquisition process by the supply apparatus supplying the lubricant film thickness in first drive apparatus 161 because the first acquisition process has ended. Therefore, controller 140 can perform again the first acquisition process with the increased lubricant film thickness in first drive apparatus 161 (in other words, with suppressed influence of a change in the parameter of first drive apparatus 161). Therefore, controller 140 can acquire a vibration value of high accuracy in this first acquisition process.

Similarly, when controller 140 performs the second acquisition process, the lubricant film thickness in second drive apparatus 162 decreases because moving plate 114 (see Fig. 1) is driven. However, when controller 140 performs the first acquisition process after the second acquisition process, the lubricant film thickness in second drive apparatus 162 increases during the first acquisition process by the supply apparatus supplying the lubricant film thickness in second drive apparatus 162 because the second acquisition process has ended. Therefore, controller 140 can perform again the second acquisition process with the increased lubricant film thickness in second drive apparatus 162 (in other words, with suppressed influence of a change in the parameter of second drive apparatus 162). Therefore, controller 140 can acquire a vibration value of high accuracy in this second acquisition process.

Both the physical quantity acquired in the first acquisition process (first physical quantity) and the physical quantity acquired in the second acquisition process (second physical quantity) are vibration values. A configuration may be implemented in which a period of performance of the first acquisition process and a period of performance of the second acquisition process overlap each other. In a period of overlap (which is also referred to as an "overlapping period" below), however, vibration generated during performance of the first acquisition process is transmitted to second vibration sensor 82, causing the vibration value detected by second vibration sensor 82 to contain noise. In addition, in the overlapping period, vibration generated during performance of the second acquisition process is transmitted to first vibration sensor 81, causing the vibration value detected by first vibration sensor 81 to contain noise. This results in controller 140 acquiring vibration values of low accuracy from first vibration sensor 81 and second vibration sensor 82.

In contrast, in the present embodiment, controller 140 performs the first acquisition process and the second acquisition process such that the period of performance of the first acquisition process and the period of performance of the second acquisition process do not overlap each other, as shown in Fig. 8. Therefore, the accuracy of the vibration values acquired by controller 140 can be ensured.

### <Third Embodiment>

In the acquisition process of step 6A in the second embodiment (see Fig. 8), injection molding machine 100 that alternately performs the first acquisition process and the second acquisition process the specified number of times has been described. An acquisition process in a third embodiment is a process of individually performing the first acquisition process a specified number of times, and individually performing the second acquisition process a specified number of times.

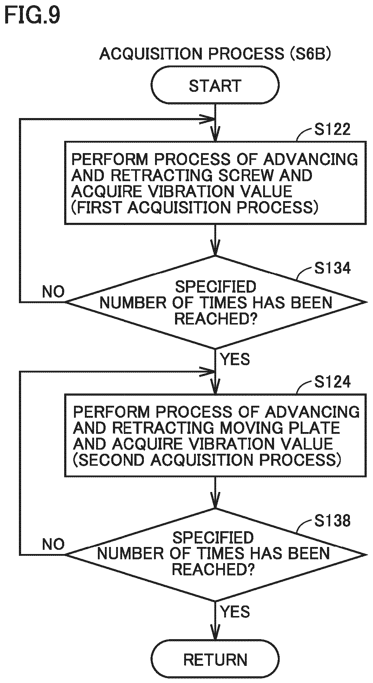

The main process by injection molding machine 100 in the third embodiment is a process in which the acquisition process of step S6 in Fig. 4 is replaced by an acquisition process of step S6B. Fig. 9 is a flowchart showing a flow of the acquisition process of step S6B. Though Fig. 9 is mainly referred to in the description of the acquisition process below, Fig. 8 is also referred to as appropriate.

In step S122, controller 140 performs the first acquisition process. Then, in step S134, controller 140 determines whether or not the number of performances of the first acquisition process has reached a specified number of times. When the number of performances of the first acquisition process has not reached the specified number of times in step S134 (NO in step S134), the process returns to step S122. Controller 140 repeats the first acquisition process until the number of performances of the first acquisition process reaches the specified number of times. When the number of performances of the first acquisition process has reached the specified number of times (YES in step S134), the process proceeds to step S124.

In step S124, controller 140 performs the second acquisition process. Then, in step S138, controller 140 determines whether or not the number of performances of the second acquisition process has reached a specified number of times. When the number of performances of the second acquisition process has not reached the specified number of times in step S138 (NO in step S138), the process returns to step S124. Controller 140 repeats the second acquisition process until the number of performances of the second acquisition process reaches the specified number of times. When the number of performances of the second acquisition process has reached the specified number of times (YES in step S138), the acquisition process of step S6B ends.

According to such a configuration, controller 140 collectively performs the first acquisition process the specified number of times, and performs the second acquisition process the specified number of times. Therefore, controller 140 can smoothly perform the first acquisition process and the second acquisition process. The specified number of times in step S134 and the specified number of times in step S138 may be the same value or different values.

### <Fourth Embodiment>

Display 132 of injection molding machine 100 in a fourth embodiment presents, when the acquisition process (first acquisition process) and the process of detecting an abnormality of first drive apparatus 161 (abnormality detection process of step S8 in Fig. 4) are performed during the period of the flushing process (see Fig. 4), a timing of end of this period.

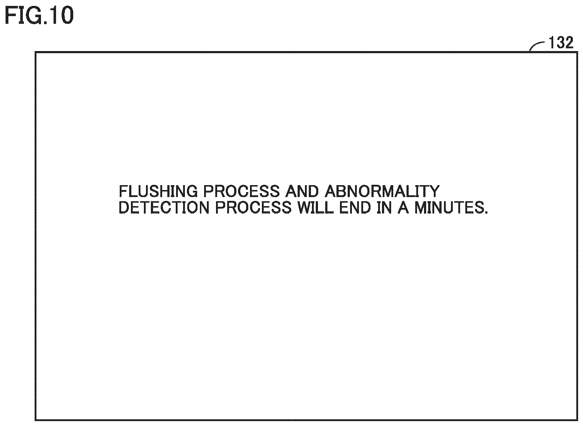

Fig. 10 is a diagram showing an exemplary presentation on display 132 in the fourth embodiment. In the example of Fig. 10, display 132 presents, as a timing of end of the period of the flushing process (end timing), a timing which is after A (A being a positive real number) minutes from the present time. Specifically, in the example of Fig. 10, display 132 presents a text image that says "Flushing process and abnormality detection process will end in A minutes."

Injection molding machine 100 in the fourth embodiment can allow the user to recognize the end timing of the period of the flushing process, thereby improving convenience of the user.

### <Fifth Embodiment>

In the following, the process of detecting an abnormality of first drive apparatus 161 based on the vibration value detected by first vibration sensor 81 is also referred to as a "first abnormality detection process," and the process of detecting an abnormality of second drive apparatus 162 based on the vibration value detected by second vibration sensor 82 is also referred to as a "second abnormality detection process."

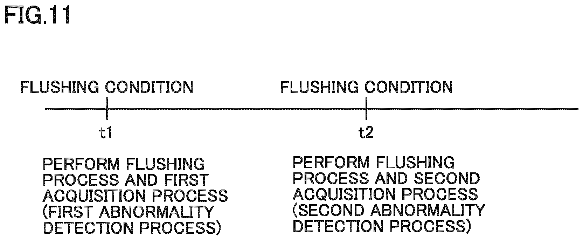

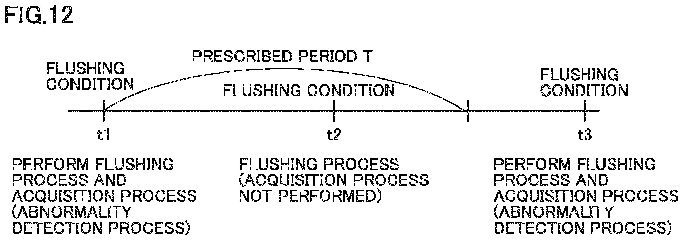

Fig. 11 is a diagram showing an exemplary time series of a process in injection molding machine 100 in a fifth embodiment. The horizontal axis represents a time axis in Fig. 11 and later-described Fig. 12. The flushing condition is satisfied at timing t1. When the flushing condition is satisfied (timing 11), controller 140 performs the first acquisition process without performing the second acquisition process during the period of the flushing process. Controller 140 then performs the first abnormality detection process based on the vibration value acquired in the first acquisition process.

The flushing condition is satisfied again at timing t2 after timing t1. When the flushing condition is satisfied (timing t2), controller 140 performs the second acquisition process without performing the first acquisition process during the period of the flushing process. Controller 140 then performs the second abnormality detection process based on the vibration value acquired in the second acquisition process.

If injection molding machine 100 performs both the first acquisition process and the second acquisition process during the periods of all flushing processes, the period of each flushing process may become excessively long. Injection molding machine 100 in the present embodiment thus performs the first acquisition process without performing the second acquisition process during the period of an arbitrary flushing process. Injection molding machine 100 then performs the second acquisition process without performing the first acquisition process during the period of the next flushing process. Therefore, the period of the flushing process can be prevented from becoming excessively long while the first abnormality detection process and the second abnormality detection process are performed.

### <Sixth Embodiment>

Fig. 12 is a diagram showing an exemplary time series of a process in injection molding machine 100 in a sixth embodiment. As shown in Fig. 12, injection molding machine 100 in the sixth embodiment uses a prescribed period T. Prescribed period T includes, for example, at least one of a concept of a prescribed time period and a concept of a prescribed number of shots. In other words, a lapse of prescribed period T includes at least one of "a concept that a prescribed time period has elapsed" and "a concept that injection molding machine 100 has performed the molding process for a prescribed number of shots." The prescribed time period is defined as one month, for example, and the prescribed number of shots is defined as the number of molded articles produced in the one month, for example.

The flushing condition is satisfied at timing t1. When the flushing condition is satisfied (timing 11), controller 140 performs the flushing process, the acquisition process, and the abnormality detection process based on the vibration value acquired in the acquisition process, during the period of the flushing process.

The flushing condition is satisfied again at timing t2 after timing 11. Timing t2 is a timing before prescribed period T elapses since timing t1. When the flushing condition is satisfied (timing t2), controller 140 performs the flushing process but does not perform the acquisition process (abnormality detection process) during the period of the flushing process.

The flushing condition is satisfied again at timing t3 after timing t2. Timing t3 is a timing after prescribed period T elapses since timing t1. When the flushing condition is satisfied (timing t3), controller 140 performs the flushing process, the acquisition process, and the abnormality detection process based on the vibration value acquired in the acquisition process, during the period of the flushing process.

If injection molding machine 100 performs the acquisition process and the abnormality detection process every time the flushing condition is satisfied, efficiency of the molding process may decrease. Therefore, when the flushing condition is satisfied (timing t2) before prescribed period T elapses since the acquisition process is performed (timing t1 in Fig. 12) during the period of the flushing process, injection molding machine 100 in the present embodiment performs the flushing process without performing the acquisition process. When the flushing condition is satisfied (timing t3) after the prescribed period elapses since the acquisition process is performed (timing 11) during the period of the flushing process, injection molding machine 100 performs the flushing process, the acquisition process, and the first abnormality detection process during the period of the flushing process.

Injection molding machine 100 thus performs the acquisition process during the period of the flushing process when the prescribed condition is satisfied only after prescribed period T has elapsed since the performance of the acquisition process during the period of the flushing process. Therefore, injection molding machine 100 in the present embodiment can suppress the decrease in efficiency of the molding process.

### <Other Embodiments>

(1) The configuration in which the physical quantity used in the process of detecting an abnormality of the drive apparatus (first drive apparatus 161 and second drive apparatus 162) is a vibration value has been described in the embodiments above. However, the physical quantity used in the process of detecting an abnormality of the drive apparatus may be another value. The physical quantity may be a temperature of the drive apparatus, a level of sound emitted by the drive apparatus, a current or a voltage supplied to a motor included in the drive apparatus, a torque of the motor, and the like.
(2) The configuration in which the abnormality detection process of step S8 in Fig. 4 is performed before the second flushing process has been described. However, controller 140 may perform the abnormality detection process in another period. For example, controller 140 may perform the abnormality detection process in parallel with the second flushing process, or may perform the abnormality detection process after the second flushing process ends.
(3) The configuration in which second drive apparatus 162 is a drive apparatus for driving moving plate 114 has been described in the embodiments above.
However, second drive apparatus 162 may be an apparatus that drives a prescribed member. The prescribed member includes, for example, at least one of moving plate 114, the ejection mechanism, and a mechanism for weighing the resin.

### [Additional Aspects]

It will be understood by those skilled in the art that the plurality of exemplary embodiments described above are specific examples of aspects below.

(Clause 1) An injection molding machine in the present disclosure includes a cylinder, a screw, a first drive apparatus, a first sensor, and a controller. The cylinder contains resin. The screw is arranged in the cylinder. The first drive apparatus drives the screw. The first sensor detects a first physical quantity of the first drive apparatus. The controller performs a flushing process for removing residual resin remaining in the cylinder by controlling the first drive apparatus to drive the screw. The controller is configured to perform a first acquisition process of acquiring the first physical quantity detected by the first sensor during the flushing process. The controller is configured to detect an abnormality of the first drive apparatus based on the first physical quantity acquired in the first acquisition process.

(Clause 2) In the injection molding machine according to Clause 1, the flushing process includes a first flushing process for removing the residual resin without introducing new resin into the cylinder, and a second flushing process for removing the residual resin by introducing new resin into the cylinder. The controller is configured to perform the first acquisition process and the second flushing process after performing the first flushing process.

(Clause 3) In the injection molding machine according to Clause 2, the injection molding machine is configured to produce a molded article using the new resin after performing the second flushing process. The controller is configured to perform the first acquisition process after performing the first flushing process and before performing the second flushing process.

(Clause 4) In the injection molding machine according to Clause 2 or 3, in the first flushing process, when an amount of movement of the screw in its direction of advancement is not a maximum amount, the controller is configured to drive the screw such that the amount of movement of the screw reaches the maximum amount, and when the amount of movement is the maximum amount, the controller is configured to not perform any processing.

(Clause 5) The injection molding machine according to any one of Clauses 1 to 4 further includes a prescribed member, a second drive apparatus, and a second sensor. The prescribed member is a member different from the screw. The second drive apparatus drives the prescribed member. The second sensor detects a second physical quantity of the second drive apparatus. The controller is configured to perform a second acquisition process of acquiring the second physical quantity detected by the second sensor during a period in which the second drive apparatus is controlled to drive the prescribed member. The controller is configured to detect an abnormality of the second drive apparatus based on the second physical quantity acquired in the second acquisition process.

(Clause 6) In the injection molding machine according to Clause 5, the controller is configured to alternately perform the first acquisition process and the second acquisition process a specified number of times.

(Clause 7) In the injection molding machine according to Clause 5, the controller is configured to perform the first acquisition process a specified number of times, and perform the second acquisition process a specified number of times.

(Clause 8) In the injection molding machine according to Clause 5, when a prescribed condition is satisfied, the controller is configured to, during a period of the flushing process, perform the first acquisition process without performing the second acquisition process during the period of the flushing process. When the prescribed condition is satisfied again, the controller is configured to, during the period of the flushing process, perform the second acquisition process without performing the first acquisition process during the period of the flushing process.

(Clause 9) In the injection molding machine according to any one of Clauses 1 to 8, when a prescribed condition is satisfied before a prescribed period elapses since the performance of the first acquisition process during a period of the flushing process, the controller is configured to perform the flushing process without performing the first acquisition process. When the prescribed condition is satisfied after the prescribed period elapses since the performance of the first acquisition process during the period of the flushing process, the controller is configured to perform the first acquisition process during the period of the flushing process.

(Clause 10) The injection molding machine according to any one of Clauses 1 to 9 further includes a display. The controller is configured to present a timing of end of a period of the flushing process on the display when the controller performs the first acquisition process and a process of detecting an abnormality of the first drive apparatus during the period of the flushing process.

(Clause 11) A method of detecting an abnormality of an injection molding machine is disclosed in the present disclosure. The injection molding machine includes a cylinder, a screw, a first drive apparatus, and a first sensor. The cylinder contains resin. The screw is arranged in the cylinder. The first drive apparatus drives the screw. The first sensor detects a first physical quantity of the first drive apparatus. The method includes performing a flushing process for removing residual resin remaining in the cylinder by controlling the first drive apparatus to drive the screw. The method includes performing a first acquisition process of acquiring the first physical quantity detected by the first sensor during the flushing process. The method includes detecting an abnormality of the first drive apparatus based on the first physical quantity acquired in the first acquisition process.

In the embodiments and the modifications described above, combination as appropriate of features described in the embodiments, including combination not mentioned in the specification, is originally intended so long as there is no inconvenience or inconsistency.

Although the embodiments of the present invention have been described, it should be understood that the embodiments disclosed herein are illustrative and non-restrictive in every respect. The scope of the present invention is defined by the terms of the claims, and is intended to include any modifications within the scope and meaning equivalent to the terms of the claims.

## Claims

1. An injection molding machine (100) comprising:
a cylinder (122) that contains resin;
a screw (123) arranged in the cylinder (122);
a first drive apparatus (161) that drives the screw (123);
a first sensor (81) that detects a first physical quantity of the first drive apparatus (161); and
a controller (140) that performs a flushing process for removing residual resin remaining in the cylinder (122) by controlling the first drive apparatus (161) to drive the screw (123), wherein
the controller (140) is configured to
perform a first acquisition process of acquiring the first physical quantity detected by the first sensor (81) during the flushing process, and
detect an abnormality of the first drive apparatus (161) based on the first physical quantity acquired in the first acquisition process.

2. The injection molding machine (100) according to claim 1, wherein
the flushing process includes
a first flushing process for removing the residual resin without introducing new resin into the cylinder (122), and
a second flushing process for removing the residual resin by introducing new resin into the cylinder (122), and
the controller (140) is configured to perform the first acquisition process and the second flushing process after performing the first flushing process.

3. The injection molding machine (100) according to claim 2, wherein
the injection molding machine (100) is configured to produce a molded article using the new resin after performing the second flushing process, and
the controller (140) is configured to perform the first acquisition process after the first flushing process and before the second flushing process.

4. The injection molding machine (100) according to claim 2 or 3, wherein in the first flushing process,
when an amount of movement of the screw (123) in its direction of advancement is not a maximum amount, the controller (140) is configured to drive the screw (123) such that the amount of movement of the screw (123) reaches the maximum amount, and
when the amount of movement is the maximum amount, the controller (140) is configured to not perform any processing.

5. The injection molding machine (100) according to any one of claims 1 to 4, further comprising:
a prescribed member different from the screw (123);
a second drive apparatus (162) that drives the prescribed member; and
a second sensor that detects a second physical quantity of the second drive apparatus (162), wherein
the controller (140) is configured to
perform a second acquisition process of acquiring the second physical quantity detected by the second sensor during a period in which the second drive apparatus (162) is controlled to drive the prescribed member, and
detect an abnormality of the second drive apparatus (162) based on the second physical quantity acquired in the second acquisition process.

6. The injection molding machine (100) according to claim 5, wherein
the controller (140) is configured to alternately perform the first acquisition process and the second acquisition process a specified number of times.

7. The injection molding machine (100) according to claim 5, wherein
the controller (140) is configured to perform the first acquisition process a specified number of times, and perform the second acquisition process a specified number of times.

8. The injection molding machine (100) according to claim 5, wherein
when a prescribed condition is satisfied, the controller (140) is configured to, during a period of the flushing process, perform the first acquisition process without performing the second acquisition process, and
when the prescribed condition is satisfied again, the controller (140) is configured to, during the period of the flushing process, perform the second acquisition process without performing the first acquisition process.

9. The injection molding machine (100) according to any one of claims 1 to 8, wherein
when a prescribed condition is satisfied before a prescribed period elapses since the performance of the first acquisition process during a period of the flushing process, the controller (140) is configured to perform the flushing process without performing the first acquisition process, and
when the prescribed condition is satisfied after the prescribed period elapses since the performance of the first acquisition process during the period of the flushing process, the controller (140) is configured to perform the first acquisition process during the period of the flushing process.

10. The injection molding machine (100) according to any one of claims 1 to 9, further comprising a display, wherein
the controller (140) is configured to present a timing of end of a period of the flushing process on the display when the controller (140) performs the first acquisition process and a process of detecting an abnormality of the first drive apparatus (161) during the period of the flushing process.

11. A method of detecting an abnormality of an injection molding machine (100) including a cylinder (122) that contains resin, a screw (123) arranged in the cylinder (122), a first drive apparatus (161) that drives the screw (123), and a first sensor (81) that detects a first physical quantity of the first drive apparatus (161), the method comprising:
performing a flushing process for removing residual resin remaining in the cylinder (122) by controlling the first drive apparatus (161) to drive the screw (123);
performing a first acquisition process of acquiring the first physical quantity detected by the first sensor (81) during the flushing process; and
detecting an abnormality of the first drive apparatus (161) based on the first physical quantity acquired in the first acquisition process.
